# EUROPÄISCHE PATENTSCHRIFT

(11) **EP 3 623 320 B1**
(45) Veröffentlichungstag und Bekanntmachung des Hinweises auf die Patenterteilung: **08.11.2023**
(21) Anmeldenummer: 19197778.4
(22) Anmeldetag: 17.09.2019
(51) Int. Cl.: B65G 13/075

(54) **ROLLENBAHN MIT EINER EINSTELLBAREN BREMSVORRICHTUNG**
ROLLER TRACK WITH AN ADJUSTABLE BRAKE
TRANSPORTEUR À ROULEAUX AVEC UN FREIN AJUSTABLE

(30) Priorität: 17.09.2018 DE 102018215773
(43) Veröffentlichungstag der Anmeldung: 18.03.2020
(73) Patentinhaber: Deutsche Post AG, 53113 Bonn (DE); SICK AG, 79183 Waldkirch (DE)
(72) Erfinder: Hartmann, Bernd, 53501 Grafschaft-Leimersdorf (DE); Prinz, Oliver, 79189 Bad Krozingen (DE); Kolb, Dr. Stephan, 79106 Freiburg i. Br. (DE)
(74) Vertreter: dompatent von Kreisler Selting Werner - Partnerschaft von Patent- und Rechtsanwälten mbB

(56) Entgegenhaltungen:
- EP-A1- 0 947 448
- DE-U1-202012 102 405
- JP-A- H0 543 025
- NL-C2- 1 021 991
- SU-A1- 1 745 629
- US-A1- 2004 173 440

## Beschreibung

Die Erfindung betrifft eine adaptive Rollenbahn, insbesondere für Sorter, zum Befördern von Objekten wie beispielsweise Packstücken, Stückgut, Pakete, Päckchen, Sendungen, Tüten oder sonstige verpackte Güter. Weiterhin betrifft die vorliegende Erfindung einen Sorter mit einer solchen adaptiven Rollenbahn. Die Erfindung betrifft ferner ein Verfahren zur Verwendung der adaptiven Rollenbahn.

In Paketverteilzentren werden die eingehenden Packstücke in verschiedenen Sortern sortiert und nach Zielen ausgegeben. Die vom Sorter an einer definierten Stelle abgeladenen Packstücke gleiten in aller Regel eine Rutsche oder Rollenbahn hinunter, um dann direkt in ein Fahrzeug wie beispielsweise Zustellfahrzeuge oder eine Wechselbrücke für den Weitertransport verladen zu werden. Die Packstücke sollen am Ende der Rutsche ohne Beschädigung ankommen und auch andere Packstücke durch Ihre Geschwindigkeit nicht beschädigen, die am Ende der Rutsche liegen. Die Packstücke rutschen dabei unkontrolliert die Bahnen hinunter. Die Geschwindigkeit wird durch unterschiedliche Reibungen eingestellt. So wird variiert zwischen Rutschen und Rollenbahnen, wobei bei einer Rutsche noch das Material (Metall/Holz) und die Neigung eingestellt werden kann. Diese Parameter müssen einmalig für durchschnittlich zu erwartende Packstücke gewählt werden. Damit werden glatte/schwere Packstücke deutlich schneller unterwegs sein als raue/leichte Packstücke. Nachteile der bekannten Schrägförderer ist, dass diese nicht sehr steil gebaut werden können und damit der Platzaufwand enorm ist. Hinzu kommt, dass schwere Packstücke leichte Packstücke beschädigen können.

SU 1745629 offenbart eine adaptive Rollenbahn nach dem Oberbegriff des Anspruchs 1, bei der die Geschwindigkeit eines Objekts erfasst wird und eine Bremswirkung in Abhängigkeit von der Geschwindigkeit des Objekts gesteuert wird.

JP H05 43025 offenbart eine adaptive Rollenbahn, bei der mittels einer mechanischen Verbindung das Gewicht die Bremswirkung von Rollen der Rollenbahn anpasst.

DE 20 2012 102405 und NL 1 021 991 offenbaren adaptive Rollenbahnen mit magnetischen Bremsvorrichtungen.

Aufgabe der Erfindung ist es eine adaptive Rollenbahn zu schaffen, um in einer möglichst kleinen Distanz eine große Höhe zu überwinden, ohne dass die dort geförderten Objekte, wie beispielsweise Postsendungen, beschädigt werden. Erfindungsgemäß wird diese Aufgabe gelöst durch eine adaptive Rollenbahn mit Merkmalen des unabhängigen Anspruch 1. Vorteilhafte Ausführungsformen der adaptiven Rollenbahn ergeben sich aus den Unteransprüchen 2 - 18. Die Aufgabe wird ferner durch einen Sorter nach Anspruch 19 gelöst. Ferner wird die Aufgabe gelöst durch ein Verfahren gemäß unabhängigen Anspruch 20.

Die erfindungsgemäße adaptive Rollenbahn zur Beförderung von Objekten, insbesondere Postsendungen, Packstücken, Stückgut, Pakete, Päckchen, Sendungen, Tüten oder sonstige verpackte Güter, insbesondere in Sortern zum Sortieren von Postsendungen oder Packstücken, weist eine Vielzahl von Rollen auf sowie eine Steuervorrichtung, wobei mit der Steuervorrichtung ein Sensor verbunden ist zur Erfassung mindestens eines Parameters eines der Objekte. Dabei ist mindestens eine Rolle mit einer einstellbaren Bremsvorrichtung verbunden, wobei die Bremsvorrichtung mit der Steuerungsvorrichtung verbunden ist. Die Steuerungsvorrichtung ist ausgebildet die Bremsvorrichtung in Abhängigkeit von erfassten Parametern anzusteuern zur Veränderung der Bremswirkung der Rolle. Die adaptive Rollenbahn hat den Vorteil, dass durch die Veränderung der Bremswirkung der Rolle die Rutschgeschwindigkeit des Objekts über die adaptive Rollenbahn verändert werden kann und in Abhängigkeit der erfassten Parametern an das jeweilige Objekt oder Postsendung angepasst werden kann. Hierdurch ist es einerseits möglich, dass die adaptive Rollenbahn eine größere Steigung aufweist als herkömmliche Rollenbahnen bzw. Schrägförderer, so dass die adaptive Rollenbahn der vorliegenden Erfindung platzsparender aufgestellt werden kann. Trotz der größeren Steigung wird durch die Veränderung der Bremswirkung sichergestellt, dass die Objekte unbeschädigt beispielsweise eine Sammelbox oder ein Fahrzeug, wie ein Zustellfahrzeug, erreichen. Auch kann die adaptive Rollenbahn gemäß der vorliegenden Erfindung zur Vereinzelung der beförderten Postsendungen bzw. Objekte genutzt werden.

Erfindungsgemäß handelt es sich bei dem durch den Sensor erfassten Parameter um die Geschwindigkeit des Objekts. Dabei wird insbesondere die Geschwindigkeit des Objekts auf einem vorgegebenen Abschnitt der Schrägbahn erfasst mittels des Sensors. Bei dem vorgegebenen Abschnitt kann es sich um einen Teil der Rollenbahn handeln und insbesondere handelt es sich hierbei um die Rutsche oder einen Teil der Rutsche. Da die Geschwindigkeitsmessung insbesondere stets im vorgegebenen Abschnitt erfolgt und die Randbedingungen während der Geschwindigkeitsmessung in diesem Abschnitt bekannt sind, kann auf einfache Weise auf das Bewegungsverhalten der sich anschließenden Rollenbahn geschlossen werden. Somit kann anhand der erfassten Geschwindigkeit die Bremsvorrichtung oder die Bremsvorrichtungen geeignet angesteuert werden.

Zusätzlich hierzu handelt es sich bei dem durch den Sensor erfassten Parameter um das Gewicht. Hierdurch wird sichergestellt, dass leichte Objekte die Rollenbahn schneller passieren können, wodurch der Durchsatz an Objekten optimiert werden kann. Gleichzeitig können schwerere Objekte stärker abgebremst werden, so dass eine Beschädigung anderer Objekte vermieden wird.

Vorzugsweise sind mehr als eine Rolle mit einer einstellbaren Bremsvorrichtung verbunden. Dabei können diese Rollen mit einer gemeinsamen Bremsvorrichtung verbunden sein, so dass es lediglich erforderlich ist, eine einstellbare Bremsvorrichtung vorzusehen. Alternativ hierzu kann für jede der Rollen jeweils eine einstellbare Bremsvorrichtung vorgesehen sein. Hierdurch ist es möglich, die Bremswirkung der einzelnen Rollen unabhängig anzusteuern und somit die Bewegung der Objekte entlang der adaptiven Rollenbahn genau steuern zu können.

Vorzugsweise weist die Bremsvorrichtung eine Wirbelstrombremse auf, wobei die Wirbelstrombremse einen Magneten aufweist und ein Metallelement, in dem die Wirbelströme durch den Magneten erzeugt werden. Dabei wird in der Wirbelstrombremse die Bremswirkung berührungslos erzeugt, wodurch Verschleiß reduziert wird und die Langlebigkeit der Bremsvorrichtung erheblich gesteigert wird.

Vorzugsweise handelt es sich bei dem Magneten um einen Dauermagneten, wobei der Abstand zwischen Dauermagnet und Metallelement veränderbar ist zur Veränderung der Bremskraft. Hierdurch wird auf einfache Weise eine Bremsvorrichtung geschaffen, bei der die Bremswirkung veränderbar ist.

Vorzugsweise handelt es sich bei dem Magneten um einen Elektromagneten, wobei der Strom, mit dem der Elektromagnet gespeist wird, veränderbar ist zur Veränderung der Bremswirkung. Wird beispielsweise der Strom erhöht, wird durch den Elektromagneten ein stärkeres magnetisches Feld erzeugt, welches sodann in dem Metallelement größere Wirbelströme verursacht und somit die Bremswirkung ebenfalls erhöht wird. Vorteilhaft ist, dass keinerlei bewegliche Teile mehr erforderlich sind und somit die Bremsvorrichtung verschleißfrei arbeitet.

Vorzugsweise handelt es sich bei der Bremsvorrichtung um eine einstellbare mechanische Bremse, wobei zur Veränderung der Bremskraft die Reibung eines Bremselements veränderbar ist. Hierbei handelt es sich um eine besonders einfache Bremsvorrichtung, welche insbesondere kostengünstig zu realisieren ist.

Ist eine Bremsvorrichtung an mehr als einer Rolle vorgesehen, so können die jeweiligen Bremsvorrichtungen jeweils ausgebildet sein wie vorstehend beschrieben. Dabei können die Bremsvorrichtungen an den jeweiligen Rollen unterschiedlich ausgebildet sein. Bevorzugt sind die Bremsvorrichtungen an den jeweiligen Rollen jedoch gleich ausgebildet.

Vorzugsweise ist die Bremsvorrichtung in die Rolle integriert oder unterhalb der Rolle angeordnet. So kann beispielsweise eine Wirbelstrombremse in die Rolle selber integriert werden, wodurch ein besonders kompakter Aufbau erzeugt wird. Alternativ hierzu kann die Bremsvorrichtung in einer Bremsrolle vorgesehen sein, welche einen direkten Kontakt mit der zu bremsenden Rolle aufweist. Hierdurch wird eine einfache Zugänglichkeit der Bremsvorrichtung geschaffen, beispielsweise für Wartung oder Reparatur.

Vorzugsweise weist die adaptive Rollenbahn eine Vielzahl von Rollen auf, welche unabhängig voneinander drehbar sind. Hierdurch wird sichergestellt, dass ein sukzessives Abbremsen der Postsendung oder des Objekts entlang der Rollenbahn gewährleistet ist, so dass sich die Rollen am Beginn der Rollenbahn schneller drehen können als die Rollen am Ende der Rollenbahn.

Alternativ hierzu sind mehrere Rollen der Vielzahl von Rollen miteinander gekoppelt, so dass die gekoppelten Rollen gemeinsam drehbar sind. Insbesondere sind die Rollen mittels eines Riemens miteinander gekoppelt. Insbesondere bei Vorsehen nur einer Bremsvorrichtung kann die Bremswirkung durch Koppeln der Rollen auf alle gekoppelten Rollen übertragen werden und so eine effektive Abbremsung des Objekts erzielt werden.

Vorzugsweise ist eine Rutsche vorgesehen. Die Rutsche kann dabei in Bewegungsrichtung des Objekts nach den Rollen angeordnet sein. Bevorzugt ist die Rutsche jedoch in Bewegungsrichtung des Objekts vor den Rollen angeordnet. Selbstverständlich können auch vor der Rutsche und nach der Rutsche Rollen vorgesehen sein.

Vorzugsweise weist der Sensor zur Ermittlung der Geschwindigkeit eine Lichtschranke auf. Insbesondere weist der Sensor zur Ermittlung der Geschwindigkeit zwei Lichtschranken auf, welche in Bewegungsrichtung des Objekts hintereinander angeordnet sind. Die Geschwindigkeit ergibt sich aus dem zeitversetzten Unterbrechen der Lichtschranke bei vorgegebenem Weg zwischen den Lichtschranken. Alternativ oder zusätzlich hierzu weist der Sensor zur Ermittlung der Geschwindigkeit einen kapazitiven Sensor oder einen induktiven Sensor oder einen Ultraschallsensor auf, wobei die Anwesenheit oder Abwesenheit eines Objekts durch Veränderung der Kapazität oder der Induktivität oder der Veränderung des reflektierten Ultraschalls detektiert wird. Alternativ oder zusätzlich hierzu weist der Sensor zur Ermittlung der Geschwindigkeit einen Hochfrequenzsensor auf, wobei insbesondere ein Hochfrequenzsignal ausgesendet wird, wobei die Anwesenheit von Objekten oder Postsendungen anhand der Beeinflussung des Hochfrequenzsignals erkannt werden. Alternativ oder zusätzlich weist der Sensor zur Ermittlung der Geschwindigkeit ein Dopplerradar auf. Alternativ oder zusätzlich hierzu weist der Sensor zur Ermittlung der Geschwindigkeit einen optischen Sensor, wie beispielsweise eine Kamera, auf, wobei mittels Bilderfassung die Geschwindigkeit der Objekte ermittelt wird. Alternativ oder zusätzlich hierzu weist mindestens eine Rolle einen Encoder auf zur Ermittlung der Drehgeschwindigkeit. Aus dem bekannten Umfang der Rolle kann hieraus die Geschwindigkeit des Objekts ermittelt werden.

Vorzugsweise ist der Sensor zur Erfassung des Gewichts in einer Rolle angeordnet. Somit kann das Gewicht des Objekts erfasst werden unmittelbar bei Eintritt in die Rollenbahn, wobei das so erfasste Gewicht durch die Steuervorrichtung verwendet wird zur Ansteuerung und Anpassung der Bremswirkung der Bremsvorrichtung.

Alternativ oder zusätzlich hierzu ist der Sensor angeordnet um das Gewicht bei Ablieferung des Objekts zu erfassen, wobei die Steuervorrichtung ausgebildet ist, das so erfasste Gewicht zwischenzuspeichern. Die Steuervorrichtung steuert sodann die Bremsvorrichtung an, sobald das Objekt die adaptive Rollenbahn erreicht. Somit wird das erfasste Gewicht des Objekts in der Steuervorrichtung hinterlegt. Durch die Verwendung eines Sorters ist bekannt, wann welches Objekt in die jeweilige Rollenbahn fällt, so dass eine entsprechende Ansteuerung der Bremsvorrichtung ermöglicht wird.

Vorzugsweise ist ein dritter Sensor mit der Steuervorrichtung zur Erfassung eines dritten Parameters eines Objekts verbunden, wobei es sich bei dem durch den Sensor erfassten Parameter um das Außenmaterial des Objekts handelt.

Das Außenmaterial hat wesentlichen Einfluss auf die Rutsch- und Rollengeschwindigkeit des Objekts. Handelt es sich beispielsweise um ein sehr raues Material, rutscht das Objekt nur sehr langsam. Gleichzeitig ist die Bremswirkung der Rollen sehr effektiv. So kann bei einem sehr rauen Außenmaterial beispielsweise die Bremswirkung der Rolle reduziert werden, so dass der Durchsatz der Objekte erhöht wird.

Vorzugsweise weist der Sensor zur Erfassung des Außenmaterials einen Mikrowellensensor auf. Dabei weist der Mikrowellensensor einen Mikrowellenresonator auf zur Bestimmung der Veränderung der Resonanz durch das Außenmaterial. Je nach Material, welches über die Rolle läuft, ändert sich die Resonanzfrequenz und Impedanz bei der Resonanzfrequenz. Daraus lässt sich auf Eigenschaften des Materials schließen.

Vorzugsweise ist zumindest ein der Sensoren in mindestens einer Rolle integriert. Hierdurch wird ein besonders kompakter Aufbau erreicht.

Vorzugsweise ist der Sensor in Bewegungsrichtung vor der ersten Bremsvorrichtung angeordnet, so dass eine objektweise Ansteuerung der veränderbaren Bremsvorrichtung möglich ist.

Vorzugswiese weist die adaptive Rollenbahn mehr als einen Abschnitt auf, wobei jeder Abschnitt mindestens eine Bremsvorrichtung aufweist, so dass für den jeweiligen Abschnitt unabhängig die Bremswirkung verändert werden kann. Hierdurch ist es möglich durch eine adaptive Rollenbahn gleichzeitig mehrere Postsendungen bzw. Objekte zu befördern, wodurch der Durchsatz der Objekte erhöht werden kann. Gleichzeitig kann auf Grund des Vorsehens der Abschnitte eine Vereinzelung der zu befördernden Objekte effektiv sichergestellt werden.

Mehrere Sensoren können vorgesehen sein, um ein und denselben Parameter zu ermitteln, so dass eine Redundanz besteht. Vorzugsweise weist mindestens eine Rolle mehrere Sensorabschnitte auf in axialer Richtung. Hierdurch kann auf einfache Weise die Breite des Objekts zur weiteren Charakterisierung des Objekts erfasst werden. Vorzugsweise weist mindestens eine Rolle mehrere Sensorabschnitte entlang ihres Umfangs auf, so dass die Länge des Objekts in Bewegungsrichtung erfasst werden kann. Insbesondere ist hierzu ein Encoder vorgesehen, um die Drehgeschwindigkeit der Rolle zu ermitteln, so dass bei bekannten Durchmessern der Rolle die Länge des Objekts ermittelt werden kann. Insbesondere handelt es sich bei den Sensorabschnitten um induktive Sensoren, kapazitive Sensoren oder Ultraschallsensoren.

Weiterhin betrifft die vorliegende Erfindung einen Sorter zur Sortierung von Objekten wie beispielsweise Packstücken mit einer oder mehrerer adaptiver Rollenbahnen wie vorstehend beschrieben zur Beförderung von Objekten im Sorter.

Weiterhin betrifft die vorliegende Erfindung ein Verfahren zum Betrieb einer adaptiven Rollenbahn nach Anspruch 20.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigen:
- Fig. 1: eine schematische Darstellung einer adaptiven Rollenbahn gemäß der vorliegenden Erfindung in Verwendung,
- Fig. 2a: eine adaptive Rollenbahn gemäß einer Ausführungsform,
- Fig. 2b: eine adaptive Rollenbahn gemäß einer weiteren Ausführungsform der vorliegenden Erfindung,
- Fig. 2c: eine weitere Ausführungsform der adaptiven Rollenbahn gemäß der vorliegenden Erfindung,
- Fig. 2d: eine weitere Ausführungsform der adaptiven Rollenbahn gemäß der vorliegenden Erfindung und
- Fig. 3: eine Detailansicht einer Rolle.

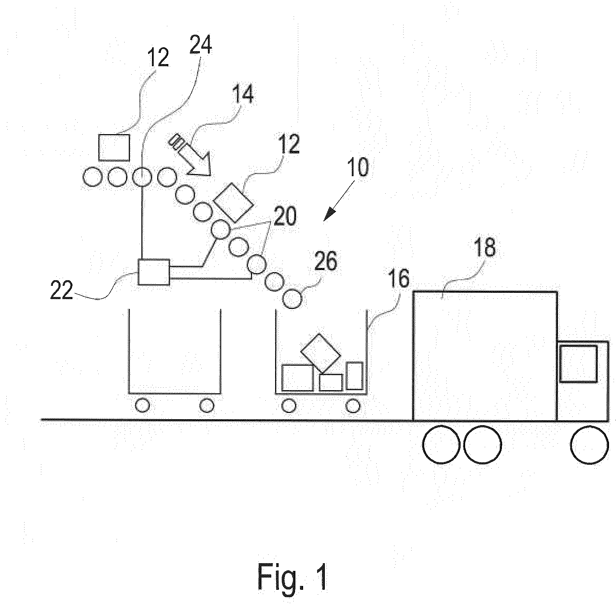

Fig. 1 zeigt eine adaptive Rollenbahn 10 gemäß der vorliegenden Erfindung. Ein Objekt 12, wie beispielsweise ein Packstück, Stückgut, Paket, Päckchen, Sendung, Tüte oder sonstige verpackte Güter, gelangt von einem Sorter (nicht dargestellt) auf die adaptive Rollenbahn 10 und bewegt sich durch angetriebene Rollen oder durch die Gewichtskraft entsprechend des Pfeils 14 in Richtung einer vorgesehenen Sammelbox 16. Die Sammelbox 16 kann sodann in ein Fahrzeug wie beispielsweise ein Zustellfahrzeug 18 verladen werden für die Zustellung. Um zu vermeiden, dass Objekte in der Sammelbox 16 durch ankommende Objekte 12 beschädigt werden, darf die Geschwindigkeit der ankommenden Objekte nicht zu hoch sein. Gleichzeitig ist ein zu starkes Abbremsen der Objekte 12 unerwünscht, da hierdurch der Durchsatz an zu befördernde Objekten reduziert wird. Hierzu sind Bremsrollen 20 vorgesehen, die mit einer einstellbaren Bremsvorrichtung verbunden sind. Bei der einstellbaren Bremsvorrichtung handelt es sich insbesondere um eine Wirbelstrombremse, deren Wirkung verändert werden kann. In der Fig. 1 sind dabei lediglich zwei Bremsrollen 20 vorgesehen. Die Anzahl an Bremsrollen 20 ist jedoch frei wählbar, so dass mehr oder weniger Bremsrollen 20 vorgesehen sein können, um eine geeignete Steuerung der Bewegung der Objekte 12 zu gewährleisten.

Mit den Bremsrollen 20 ist eine Steuervorrichtung 22 verbunden, mittels derer die Bremsvorrichtung in den Bremsrollen 20 ansteuern kann zur Veränderung der Bremswirkung. Weiterhin ist eine Sensorrolle 24 vorgesehen, wobei durch die Sensorrolle 24 die Geschwindigkeit des Objekts 12 und das Gewicht des Objekts 12 erfasst wird.

Zusätzlich kann durch die Sensorrolle 24 auch das Außenmaterial des Objekts 12 erfasst werden. Die Sensorrolle 24 ist mit der Steuervorrichtung 22 verbunden, wobei die Steuervorrichtung 22 die Bremsvorrichtung in den Bremsrollen 20 entsprechend den durch die Sensorrolle 24 erfassten Parametern ansteuert. Weist somit ein Objekt 12 eine zu hohe Geschwindigkeit auf, welche durch die Sensorrolle 24 erfasst wird, wird durch die Steuervorrichtung 22 die Bremswirkung der Bremsrollen 20 erhöht, so dass eine ausreichende Geschwindigkeitsreduzierung des Objekts 12 entlang der adaptiven Rollenbahn 10 erreicht werden kann und somit das Objekt 12 keine anderen Objekte in der Sammelbox 16 beschädigt.

Nachfolgend werden gleiche oder ähnliche Bauelemente mit denselben Bezugszeichen gekennzeichnet.

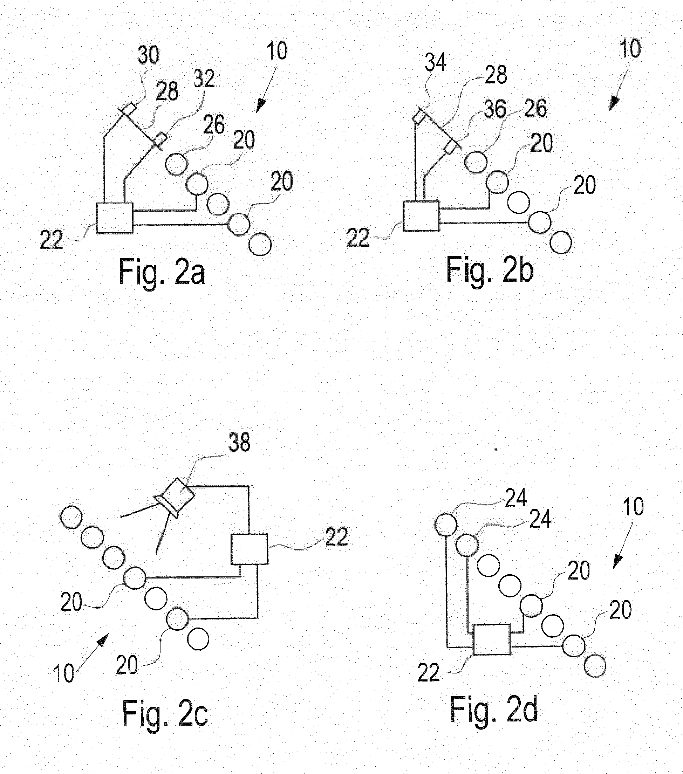

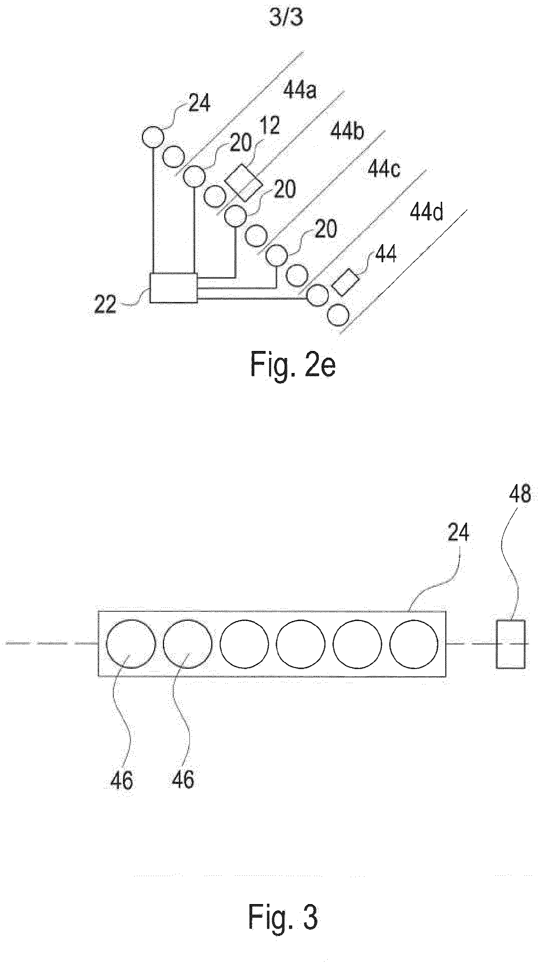

Fig. 2a zeigt eine alternative Ausführungsform der adaptiven Rollenbahn 10, bei der in Bewegungsrichtung vor den Rollen 26 eine Rutsche 28 vorgesehen ist. Weiterhin ist eine erste Lichtschranke 30 im Bereich der Rutsche 28 vorgesehen und in Bewegungsrichtung nach der ersten Lichtschranke 30 ist eine zweite Lichtschranke 32 vorgesehen, welche ebenfalls im Bereich der Rutsche 28 angeordnet ist. Durch die Rutsche 28 wird ein definierter Abschnitt der adaptiven Rollenbahn 10 ausgebildet, wobei durch die erste Lichtschranke 30 und die zweite Lichtschranke 32 die Geschwindigkeit eines Objekts 12 ermittelt werden kann. Da die Randbedingungen für die Bewegung des Objekts 12 in dem Abschnitt, definiert durch die Rutsche 28, für alle Objekte 12 identisch ist, also gleich Anfangsgeschwindigkeit und gleicher Untergrund, kann durch die Messung der Geschwindigkeit mittels der ersten Lichtschranke 30 und der zweiten Lichtschranke 32 auf das weitere Bewegungsverhalten des jeweiligen Objekts 12 auf der sich anschließenden Rollenbahn geschlossen werden. Die Bremsrollen 20 werden sodann von der Steuervorrichtung 22 geeignet angesteuert um eine Bremswirkung zu erzielen, die einerseits einen optimalen Durchsatz gewährleistet und andererseits eine Beschädigung anderer Objekte beispielsweise in der Sammelbox 16 vermeidet.

Fig. 2b weist statt der ersten Lichtschranke 30 und der zweiten Lichtschranke 32 einen ersten Sensor 34 und einen zweiten Sensor 36 auf, wobei durch den ersten Sensor 34 und den zweiten Sensor 36 die Anwesenheit eines Objekts wie beispielsweise eine Postsendung auf der Rutsche 28 detektieren kann. Bei dem ersten Sensor 34 und dem zweiten Sensor 36 handelt es sich beispielsweise um einen induktiven Sensor, einen kapazitiven Sensor oder einen Ultraschallsensor mittels dem auf einfache Weise die Anwesenheit eines Objekts 12 erfasst werden kann. Somit wird durch den ersten Sensor 34 und den zweiten Sensor 36 die Geschwindigkeit des Objekts 12 erfasst in dem durch die Rutsche 28 definierten Abschnitt der adaptiven Rollenbahn 10. Entsprechend werden die Bremsrollen 20 durch die Steuervorrichtung 22 angesteuert um ein optimales Bewegungsverhalten des Objekts 12 zu erzielen.

Alternativ hierzu kann selbstverständlich der definierte Abschnitt auch ein ausgebildet sein im Bereich der Rollen 26. In Fig. 2c ist eine Kamera 38 vorgesehen, welche in einem definierten Abschnitt der adaptiven Rollenbahn 10 mittels Bilderfassung die Geschwindigkeit der Objekte erfasst. Da in dem definierten Abschnitt die Randbedingung der Bewegung für alle Objkete 12 identisch sind, kann durch die erfasste Geschwindigkeit des jeweiligen Objekts 12 auf das weitere Bewegungsverhalten entlang der adaptiven Rollenbahn 10 geschlossen werden. Entsprechend werden die Bremsrollen 20 durch die Steuervorrichtung 22 geeignet angesteuert um ein optimales Bewegungsverhalten für das jeweilige Objekt 12 zu erhalten.

In Fig. 2d sind zwei Sensorrollen 24 vorgesehen. Bei den Sensorrollen 24 kann es sich beispielsweise um Sensorrollen handeln, welche mittels eines ausgesandten Hochfrequenzsignals, wie aus DE 10 2014 109 402 A1 bekannt, die Anwesenheit eines Objekts erfassen.

Die in den Figs. 2a - 2d gezeigte Abfolge von Rollen 26 und Rutsche 28 kann beliebig an die jeweilige Anwendung angepasst werden. So können in Bewegungsrichtung 14 des Objekts 12 vor der Rutsche 28 weitere Rollen 26 vorgesehen sein. Weiterhin ist es möglich, dass einzelne oder mehrere Rollen 26 angetrieben sind zur aktiven Weiterbewegung der Objekte 12. Auch die Anordnung der Bremsrollen ist unter der Vielzahl der vorhandenen Rollen 26 frei wählbar zur Anpassung an die jeweilige Anwendung. Ebenso kann die adaptive Rollenbahn 10 in ein oder mehrere Abschnitte 45a bis 45b untergliedert werden, wobei einzelne Abschnitte 45a bis 45d jeweils mindesten eine Bremsrolle 20 aufweisen, die von der Steuervorrichtung 22 unterschiedlich angesteuert werden können. Somit können auf der adaptiven Rollenbahn 10 weitere Objekte 44 gleichzeitig bewegt werden.

Fig. 3 zeigt die Detailansicht einer Sensorrolle 24. Die Sensorrolle 24 weist eine Vielzahl von Sensorflächen 46 auf. Durch Vorsehen der Sensorflächen 46 ist es möglich, die Breite des Objekts zu ermitteln, je nachdem welche der Sensorflächen 46 von dem Objekt überdeckt werden. Gleichzeitig ist die Sensorrolle 24 mit einem Encoder 48 verbunden, so dass die Drehgeschwindigkeit der Sensorrolle 24 bekannt ist. Aus dem bekannten Umfang der Sensorrolle 24 kann einerseits auf die Abrollgeschwindigkeit der Sensorrolle 24 geschlossen werden, andererseits kann hierdurch, durch Vorsehen der Sensorflächen 46, auf die Länge des Objekts geschlossen werden, so dass durch Vorsehen der Sensorflächen 46 Breite und Länge des Objekts ermittelbar sind.

Die hier gezeigten Ausführungsformen stellen nur Beispiele für die vorliegende Erfindung dar und dürfen daher nicht einschränkend verstanden werden. Alternativen durch den Fachmann in Erwägung zu den Ausführungsformen sind gleichermaßen vom Schutzbereich der vorliegenden Erfindung umfasst. Ebenso können die Merkmale der einzelnen Ausführungsformen frei miteinander kombiniert werden, so dass die Anordnung von Rollen 26 und Rutsche 28 sowie Art und Anordnung der Sensoren frei miteinander kombiniert werden kann.

### Bezugszeichenliste

10 adaptive Rollenbahn
12 Objekt
14 Bewegungsrichtung
16 Sammelbox
18 Fahrzeug
20 Bremsrolle
22 Steuervorrichtung
24 Sensorrolle
26 Rollen
28 Rutsche
30 erste Lichtschranke
32 zweite Lichtschranke
34 erster Sensor
36 zweiter Sensor
38 Kamera
40 erster Abschnitt
42 zweiter Abschnitt
44 weiteres Objekt
45a - 45d Abschnitte
46 Sensorflächen
48 Encoder

## Patentansprüche

1. Adaptive Rollenbahn, insbesondere für Sorter, zum Befördern von Objekten (12), insbesondere Packstücken (12), mit einer Vielzahl von Rollen (26, 20) und einer Steuervorrichtung (22), wobei ein erster Sensor (30, 32, 34, 36, 38) mit der Steuervorrichtung (22) zur Erfassung eines ersten Parameters eines Objektes verbunden ist, wobei mindestens eine Rolle (20) mit einer einstellbaren Bremsvorrichtung verbunden ist, wobei die Bremsvorrichtung mit der Steuervorrichtung (22) verbunden ist und wobei die Steuervorrichtung (22) ausgebildet ist die Bremsvorrichtung in Abhängigkeit vom erfassten ersten Parameter anzusteuern zur Veränderung der Bremswirkung der Rolle (20), wobei es sich bei dem ersten Parameter um die Geschwindigkeit des Objekts (12) handelt,
**dadurch gekennzeichnet, dass** ein zweiter Sensor (30, 32, 34, 36, 38) mit der Steuervorrichtung (22) zur Erfassung eines zweiten Parameters eines Objektes verbunden ist, wobei es sich bei dem zweiten Parameter um das Gewicht des Objekts (12) handelt, und dass die Steuervorrichtung (22) ausgebildet ist die Bremsvorrichtung in Abhängigkeit vom erfassten zweiten Parameter zusätzlich zum ersten Parameter anzusteuern zur Veränderung der Bremswirkung der Rolle (20).

2. Adaptive Rollenbahn nach Anspruch 1, **dadurch gekennzeichnet, dass** die Bremsvorrichtung eine Wirbelstrombremse aufweist, wobei die Wirbelstrombremse einen Magneten und ein Metallelement aufweist, in dem die Wirbelströme erzeugt werden.

3. Adaptive Rollenbahn nach Anspruch 2, **dadurch gekennzeichnet, dass** es sich bei dem Magneten um einen Dauermagneten handelt und der Abstand zwischen Dauermagnet und Metallelement veränderbar ist zur Veränderung der Bremskraft.

4. Adaptive Rollenbahn nach Anspruch 2, **dadurch gekennzeichnet, dass** es sich bei dem Magneten um einen Elektromagneten handelt und der Strom veränderbar ist zur Veränderung der Bremskraft.

5. Adaptive Rollenbahn nach Anspruch 1, **dadurch gekennzeichnet, dass** es sich bei der Bremsvorrichtung um eine einstellbare mechanische Bremse handelt, wobei zur Veränderung der Bremskraft die Reibung eines Bremselementes veränderbar ist.

6. Adaptive Rollenbahn nach einem der Ansprüche 1 bis 5, **dadurch gekennzeichnet, dass** die Bremsvorrichtung in die Rolle (20) integriert ist oder unterhalb der Rolle angeordnet ist.

7. Adaptive Rollenbahn nach einem der Ansprüche 1 bis 6, **dadurch gekennzeichnet, dass** die Vielzahl von Rollen (26) unabhängig voneinander drehbar sind.

8. Adaptive Rollenbahn nach einem der Ansprüche 1 bis 6, **dadurch gekennzeichnet, dass** mehrere Rollen (26) der Vielzahl von Rollen miteinander gekoppelt sind insbesondere durch einen Riemen, so dass die gekoppelten Rollen gemeinsam drehbar sind.

9. Adaptive Rollenbahn nach einem der Ansprüche 1 bis 8, **gekennzeichnet durch** eine Rutsche (28), wobei die Rutsche (28) insbesondere in Bewegungsrichtung (14) des Objekts (12) vor den Rollen (26) angeordnet ist.

10. Adaptive Rollenbahn nach einem der Ansprüche 1 bis 9, **dadurch gekennzeichnet, dass** die Geschwindigkeit des Objekts (12) auf einem vorgegebenen Abschnitt der Schrägbahn (28) erfasst wird.

11. Adaptive Rollenbahn nach Anspruch 10, **dadurch gekennzeichnet, dass** das der erste Sensor zur Ermittlung der Geschwindigkeit eine Lichtschranke (30, 32), einen kapazitiven Sensor, einen induktiven Sensor, Dopplerradar, einen Hochfrequenzsensor (34, 36) oder einen optischen Sensor (38) aufweist.

12. Adaptive Rollenbahn nach einem der Ansprüche 1 bis 11, **dadurch gekennzeichnet, dass** der zweite Sensor zur Erfassung des Gewichts unmittelbar am Einlass der adaptiven Rollenbahn angeordnet ist.

13. Adaptive Rollenbahn nach einem der Ansprüche 1 bis 12, **dadurch gekennzeichnet, dass** der zweite Sensor zur Erfassung des Gewichts in einer Rolle angeordnet ist.

14. Adaptive Rollenbahn nach einem der Ansprüche 1 bis 11, **dadurch gekennzeichnet, dass** der zweite Sensor angeordnet ist um das Gewicht bei Ablieferung des Objekts (12) zu erfassen, wobei die Steuervorrichtung (22) ausgebildet ist das Gewicht zwischenzuspeichern, wobei die Steuervorrichtung (22) die Bremsvorrichtung ansteuert bei Erreichen des Objekts (12) der adaptiven Rollenbahn.

15. Adaptive Rollenbahn nach einem der Ansprüche 1 bis 14, **dadurch gekennzeichnet, dass** ein dritter Sensor (30, 32, 34, 36, 38) mit der Steuereinrichtung (22) zur Erfassung eines dritten Parameters eines Objektes verbunden ist, wobei es sich bei dem dritten Parameter um das Außenmaterial des Objekts (12) handelt.

16. Adaptive Rollenbahn nach Anspruch 15, **dadurch gekennzeichnet, dass** der dritte Sensor zur Erfassung des Außenmaterials ausgebildet ist als Mikrowellensensor, wobei der Mikrowellensensor einen Mikrowellenresonator aufweist zur Bestimmung der Veränderung der Resonanz durch das Außenmaterial.

17. Adaptive Rollenbahn nach einem der Ansprüche 1 bis 16, **dadurch gekennzeichnet, dass** der Sensor zumindest ein der Sensoren (30, 32, 34, 36, 38) in mindestens eine Rolle (24) integriert ist.

18. Adaptive Rollenbahn nach Anspruch 17, **dadurch gekennzeichnet, dass** die mindestens eine Rolle (24) mehrere Sensorabschnitte (46) aufweist in axiale Richtung und/oder entlang ihres Umfangs zur Erfassung der Breite und Länge des Objekts (12).

19. Sorter zur Sortierung von Objekten, insbesondere Packstücken, mit einer oder mehr adaptiver Rollenbahnen nach einem der Ansprüche 1 bis 18.

20. Verfahren zum Betrieb einer adaptiven Rollenbahn (10) nach einem der Ansprüche 1 bis 18 mit den folgenden Schritten:
- Bestimmen der Parameter des Objekts (12);
- Verändern der Bremswirkung der einstellbaren Bremsvorrichtung anhand der Parameter.

## Claims

1. An adaptive roller track, in particular for sorters, for conveying objects (10), in particular packages (12), with a plurality of rollers (26, 20) and a control device (22), a first sensor (30, 32, 34, 36, 38) being connected to the control device (22) to detect a first parameter of an object, at least one roller (20) being connected to an adjustable brake device, the brake device being connected to the control device (22), and the control device (22) being configured to control the brake device as a function of the detected first parameter to change the braking effect of the roller (20), the first parameter being the velocity of the object (12),
**characterized in that**
a second sensor (30, 32, 34, 35, 38) is connected to the control device (22) to detect a second parameter of an object, the second parameter being the weight of the object (12), and the control device (22) is configured to control the brake device as a function of the detected second parameter in addition to the first parameter to change the braking effect of the roller (20).

2. The adaptive roller track according to claim 1, **characterized in that** the brake device comprises an eddy current brake, the eddy current brake comprising a magnet and a metal element in which the eddy currents are generated.

3. The adaptive roller track according to claim 2, **characterized in that** the magnet is a permanent magnet and the distance between the permanent magnet and the metal element is variable to change the braking force.

4. The adaptive roller track according to claim 2, **characterized in that** the magnet is an electromagnet and the current is variable to change the braking force.

5. The adaptive roller track according to claim 1, **characterized in that** the brake device is an adjustable mechanical brake, the friction of a brake element being variable to change the braking force.

6. The adaptive roller track according to any one of claims 1 to 5, **characterized in that** the brake device is integrated in the roller (20) or arranged below the roller.

7. The adaptive roller track according to any one of claims 1 to 6, **characterized in that** the plurality of rollers (26) can be rotated independently.

8. The adaptive roller track according to any one of claims 1 to 6, **characterized in that** several rollers (26) of the plurality of rollers are coupled to each other, in particular via a belt, so that the coupled rollers can be rotated together.

9. The adaptive roller track according to any one of claims 1 to 8, **characterized by** a chute (28), the chute (28) being arranged in particular upstream of the rollers (26) in the direction of movement (14) of the object (12).

10. The adaptive roller track according to any one of claims 1 to 9, **characterized in that** the velocity of the object (12) is detected in a predefined section of the chute (28).

11. The adaptive roller track according to claim 10, **characterized in that** the first sensor for detecting the velocity comprises a light barrier (30, 32), a capacitive sensor, an inductive sensor, Doppler radar, a high-frequency sensor (34, 36), or an optical sensor.

12. The adaptive roller track according to any one of claims 1 to 11, **characterized in that** the second sensor for detecting the weight is arranged immediately at the inlet of the adaptive roller track.

13. The adaptive roller track according to any one of claims 1 to 12, **characterized in that** the second sensor is arranged in a roller to detect the weight.

14. The adaptive roller track according to any one of claims 1 to 11 **characterized in that** the second sensor is arranged to detect the weight of the object (12) upon delivery, the control device (22) being configured to buffer the weight, the control device (22) controlling the brake device when the object (12) arrives at the adaptive roller track.

15. The adaptive roller track according to any one of claims 1 to 14, **characterized in that** a third sensor (30, 32, 34, 36, 38) is connected to the control device (22) to detect a third parameter of an object, the third parameter being the outer material of the object (12).

16. The adaptive roller track according to claim 15, **characterized in that** the third sensor for detecting the outer material is configured as a microwave sensor, the microwave sensor comprising a microwave resonator to determine the change in resonance caused by the outer material.

17. The adaptive roller track according to any one of claims 1 to 16, **characterized in that** at least one of the sensors (30, 32, 34, 36, 38) is integrated in at least one roller (24).

18. The adaptive roller track according to claim 17, **characterized in that** for the detection of the width and the length of the object (12), the at least one roller (24) comprises a plurality of sensor sections (46) in the axial direction and/or along its circumference.

19. A sorter for sorting objects, in particular packages, comprising one or more adaptive roller tracks according to any one of claims 1 to 18.

20. A method for operating an adaptive roller track (10) according to any one of claims 1 to 18, comprising the steps of:
- determining the parameters of the object (12);
- changing the braking effect of the adjustable brake device based on the parameters.

## Revendications

1. Transporteur à rouleaux, adaptatif, notamment pour trieuse, pour transporter des objets (12), notamment des paquets (12), comprenant un ensemble de rouleaux (26, 20) et un dispositif de commande (22),
un premier capteur (30, 32, 34, 36, 38) étant relié au dispositif de commande (22) pour saisir un premier paramètre d'un objet,
au moins un rouleau (20) est relié à un dispositif de frein réglable,
- le dispositif de frein est relié au dispositif de commande (22), et
- le dispositif de commande (22) est réalisé pour commander le dispositif de frein en fonction du premier paramètre saisi, pour modifier l'effet de freinage du rouleau (20), le premier paramètre étant la vitesse de l'objet (12),
transporteur **caractérisé en ce que**
un second capteur (30, 32, 34, 36, 38) est relié au dispositif de commande (22) pour saisir un second paramètre d'un objet,
- le second paramètre étant le poids de l'objet (12), et
- le dispositif de commande (22) est réalisé pour commander le dispositif de frein en fonction du second paramètre saisi en plus du premier paramètre pour modifier l'effet de freinage du rouleau (20).

2. Transporteur à rouleaux, adaptatif, selon la revendication 1,
**caractérisé en ce que**
le dispositif de frein comporte un frein à courants de Foucault, et
ce frein à courants de Foucault a un aimant et un élément métallique dans lequel on génère les courants de Foucault.

3. Transporteur à rouleaux, adaptatif, selon la revendication 2,
**caractérisé en ce que**
l'aimant est un aimant permanent et on modifie la distance entre l'aimant permanent et l'élément métallique pour modifier la force de freinage.

4. Transporteur à rouleaux, adaptatif, selon la revendication 2,
**caractérisé en ce que**
l'aimant est un électro-aimant et on règle le courant pour modifier la force de freinage.

5. Transporteur à rouleaux, adaptatif, selon la revendication 1,
**caractérisé en ce que**
le dispositif de frein est un frein mécanique réglable et on modifie le frottement d'un élément de frein pour modifier la force de freinage.

6. Transporteur à rouleaux, adaptatif, selon l'une des revendications 1 à 5,
**caractérisé en ce que**
le dispositif de frein est intégré dans le rouleau (20) ou est installé sous le rouleau.

7. Transporteur à rouleaux, adaptatif, selon l'une des revendications 1 à 6,
**caractérisé en ce que**
les rouleaux (26) de l'ensemble tournent indépendamment l'un de l'autre.

8. Transporteur à rouleaux, adaptatif, selon l'une des revendications 1 à 6,
**caractérisé en ce que**
plusieurs rouleaux (26) de l'ensemble des rouleaux sont couplés entre eux notamment par une courroie pour que les rouleaux couplés tournent en commun.

9. Transporteur à rouleaux, adaptatif, selon l'une des revendications 1 à 8,
**caractérisé par**
une rampe (28), et cette rampe (28) est en amont des rouleaux (26) dans la direction de déplacement (14) des objets (12).

10. Transporteur à rouleaux, adaptatif, selon l'une des revendications 1 à 9,
**caractérisé en ce que**
on saisit la vitesse de l'objet (12) sur un segment prédéfini de la rampe (28).

11. Transporteur à rouleaux, adaptatif, selon la revendication 10,
**caractérisé en ce que**
le capteur pour déterminer la vitesse comprend : une barrière lumineuse (30, 32), un capteur capacitif, un capteur inductif, un radar Doppler, un capteur haute fréquence (34, 36) ou un capteur optique (38).

12. Transporteur à rouleaux, adaptatif, selon l'une des revendications 1 à 11,
**caractérisé en ce que**
le second capteur pour saisir le poids est directement à l'entrée du transport à rouleaux adaptatif.

13. Transporteur à rouleaux, adaptatif, selon l'une des revendications 1 à 12,
**caractérisé en ce que**
le second capteur pour saisir le poids est installé dans un rouleau.

14. Transporteur à rouleaux, adaptatif, selon l'une des revendications 1 à 11,
**caractérisé en ce que**
le second capteur est installé pour saisir le poids de livraison de l'objet (12), le dispositif de commande (22) étant réalisé pour enregistrer provisoirement en mémoire le poids, le dispositif de commande (22) commandant le dispositif de frein lorsque l'objet (12) arrive sur le transporteur à rouleaux adaptatif.

15. Transporteur à rouleaux, adaptatif, selon l'une des revendications 1 à 14,
**caractérisé en ce que**
un troisième capteur (30, 32, 34, 36, 38) est relié à l'installation de commande (22) pour saisir un troisième paramètre d'un objet, ce troisième paramètre étant la matière extérieure de l'objet (12).

16. Transporteur à rouleaux, adaptatif, selon la revendication 15,
**caractérisé en ce que**
le capteur pour saisir la matière extérieure est un capteur microondes, ce capteur microondes ayant un résonateur microondes pour déterminer la variation de résonance à travers la matière extérieure.

17. Transporteur à rouleaux, adaptatif, selon l'une des revendications 1 à 16,
**caractérisé en ce que**
le capteur, au moins l'un des capteurs (30, 32, 34, 36, 38) est au moins intégré dans un rouleau (24).

18. Transporteur à rouleaux, adaptatif, selon la revendication 17,
**caractérisé en ce que**
au moins un rouleau (24) comporte plusieurs segments de capteur (46) dans sa direction axiale et/ou le long de sa périphérie pour saisir la largeur et la longueur de l'objet (12).

19. Trieuse pour trier des objets, notamment des paquets comportant un ou plusieurs transporteurs à rouleaux, adaptatif, selon l'une des revendications 1 à 18.

20. Procédé de gestion d'un transporteur à rouleaux, adaptatif (10), selon l'une des revendications 1 à 18 comprenant les étapes suivantes consistant à :
- déterminer le paramètre de l'objet (12),
- modifier l'effet de freinage du dispositif de frein réglable à l'aide des paramètres.
